Europäisches Patentamt

European Patent Office

Office européen des brevets

(19)

(11) Numéro de publication : **0 055 643**
**B1**

# (12) FASCICULE DE BREVET EUROPÉEN

(45) Date de publication du fascicule du brevet :
**25.07.84**

(51) Int. Cl.³ : **G 21 C 11/08**

(21) Numéro de dépôt : **81401896.6**

(22) Date de dépôt : **30.11.81**

(54) **Réacteur nucléaire refroidi par un métal liquide contenu dans une cuve obturée par des fermetures supérieures.**

(30) Priorité : 09.12.80 FR 8026082

(43) Date de publication de la demande :
07.07.82 Bulletin 82/27

(45) Mention de la délivrance du brevet :
25.07.84 Bulletin 84/30

(84) Etats contractants désignés :
**BE DE GB IT NL**

(56) Documents cités :
DE-A- 2 113 672
DE-A- 2 732 741
GB-A- 1 412 764
US-A- 3 016 462
US-A- 3 493 758
US-A- 4 116 765
US-A- 4 124 447
Rapport ANL-5719, mai 1957, no. 148 L.J. KOCH et al.
"Experimental breeder reactor II (EBR-II)" page 148

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **Artaud, Robert
9, Avenue Claude Debussy
F-13100 Aix-en-Provence (FR)**
Inventeur : **Aubert, Michel
Chemin de Sainte Roustagne
F-04100 Manosque (FR)**
Inventeur : **Lemercier, Guy
67, Avenue de la Bourgade
F-13610 Le Puy Sainte Reparade (FR)**
Inventeur : **Lambert, Paul
9, Allée Sully
F-38130 Echirolles (FR)**
Inventeur : **Chevallier, Gilbert
25, Le Hameau Fleuri Montbonnot
F-38330 Saint Ismier (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention s'applique à un réacteur nucléaire à neutrons rapides, refroidi par un métal liquide contenu dans une cuve obturée par des fermetures supérieures, celles-ci étant essentiellement constituées par une dalle et des bouchons tournants.

Dans les réacteurs nucléaires du type à neutrons rapides, le cœur du réacteur contenant les assemblages combustibles est disposé à l'intérieur d'une cuve à axe vertical, dite cuve principale, obturée à sa partie supérieure par une dalle portant un ou plusieurs bouchons tournants dont les rotations combinées autorisent la manutention du combustible dans le cœur au moyen de systèmes appropriés tels que des ringards. Généralement, la dalle est montée à l'extrémité supérieure d'un puits de cuve et elle assure le supportage de la cuve principale ainsi que des moyens de pilotage et d'arrêt du réacteur. De plus, dans les réacteurs du type intégré, la dalle assure également le supportage des pompes et des échangeurs de chaleur qui se trouvent alors confinés en totalité à l'intérieur de la cuve principale. Le transfert des calories dissipées par le combustible nucléaire placé dans le cœur du réacteur vers les échangeurs de chaleur primaires est assuré par un métal liquide, généralement du sodium, qui remplit presque en totalité la cuve principale. Le sodium liquide est surmonté d'une atmosphère ou d'un « ciel » de gaz neutre, généralement de l'argon, séparant la surface libre du sodium de la dalle et des bouchons tournants qui constituent les éléments essentiels des fermetures supérieures de la cuve. Le sodium liquide étant un fluide condensable, le ciel de gaz neutre est chargé de vapeurs et d'aérosols de sodium.

Dans un réacteur de ce type, les fermetures supérieures de la cuve principale comprennent une structure rigide réalisée généralement en acier, cette structure étant remplie de béton servant de protection biologique. Pour différentes raisons, et notamment pour éviter les contraintes mécaniques résultant des hétérogénéités de températures existant entre la partie centrale de la dalle et sa périphérie, il est nécessaire d'assurer le refroidissement des fermetures supérieures de la cuve.

A cet effet, on a proposé de refroidir les fermetures supérieures de la cuve à une température moyenne voisine de 50 °C en faisant circuler un liquide tel que de l'eau dans des tuyauteries soudées aux structures de la dalle et des bouchons tournants. Cependant, cette solution présente notamment certains inconvénients qui conduisent à une augmentation sensible du coût du réacteur. Ainsi, les éléments des fermetures supérieures de la cuve principale sont maintenus à une température nettement inférieure à la température de fusion du sodium contenu dans la cuve. Il est donc nécessaire de protéger la paroi ou semelle inférieure de chacun de ces éléments en leur adjoignant une isolation thermique constituée de calorifuge métallique et d'un écran en acier inoxydable. Les surfaces verticales des viroles de traversée des bouchons et des autres composants tels que les pompes et les échangeurs traversant les fermetures supérieures doivent également être isolées thermiquement afin que les campagnes de manutention du combustible et les opérations de manutentions spéciales des composants ne soient pas gênées par la présence des dépôts de sodium solidifié dans les espaces annulaires correspondants. Le coût du calorifuge qui doit être utilisé étant particulièrement élevé, il en résulte un handicap économique certain pour cette solution connue. De plus, l'encombrement du calorifuge et de la fourrure thermique dans les espaces annulaires de traversée des composants conduit à accroître sensiblement le diamètre de la dalle et, par conséquent, celui de la cuve. Le coût du réacteur est ainsi doublement pénalisé. En outre, une température de l'ordre de 100 °C étant requise au niveau de la face supérieure des brides de supportage des composants tels que les bouchons, les pompes ou les échangeurs, permettant en pratique d'éviter tout dépôt de sodium au niveau de l'appui correspondant, la différence entre cette température et la température des fermetures supérieures (environ 50 °C) interdit toute intégration de ces brides à la structure de la dalle. Il en résulte une configuration relativement complexe de cette structure augmentant encore le coût du réacteur.

La présente invention a pour objet un réacteur comportant des fermetures supérieures dont on fixe le niveau de température de manière à résoudre les problèmes de contraintes liés aux différences de température entre ces fermetures et les cuves du réacteur et autorisant la suppression de l'isolation thermique aussi bien au niveau des semelles inférieures des éléments constituant les fermetures supérieures de la cuve qu'au niveau des viroles de traversée des composants tels que les bouchons tournants, les pompes ou les échangeurs, cette dernière suppression ayant pour conséquence une réduction des diamètres de la dalle et de la cuve conduisant à une diminution sensible du prix de revient du réacteur. Le niveau de température de fonctionnement selon l'invention a également pour objet de permettre l'intégration des brides des composants à la structure des fermetures supérieures de la cuve.

A cet effet, et conformément à l'invention, il est proposé un réacteur nucléaire à neutrons rapides, refroidi par un métal liquide contenu dans une cuve principale et surmonté par une atmosphère de gaz neutre, ladite cuve étant obturée par des fermetures supérieures comprenant une dalle et au moins un bouchon tournant, ces fermetures supérieures comportant au moins un circuit de circulation d'un fluide de refroidissement placé à l'intérieur desdites fermetures, caractérisé en ce que le fluide de refroidissement est un gaz, ledit circuit comportant une pluralité de compartiments délimités par des cloisons verticales sensiblement radiales, le gaz traversant à l'intérieur de chaque compartiment, l'épaisseur desdites fermetures de haut en bas, pour pénétrer dans un collecteur d'alimentation délimité entre la face inférieure desdites fermetures et une première paroi sensiblement horizontale située au-dessus de celle-ci, le gaz retraversant ensuite, à l'intérieur de chaque compartiment, l'épaisseur desdites fermetures de bas en haut, pour pénétrer dans un collecteur d'évacuation délimité entre la face supérieure des fermetures et une deuxième paroi sensiblement horizontale située en dessous de celle-ci, de façon à refroidir lesdites fermetures à une température quasi homogène et à maintenir les surfaces baignées par l'atmosphère de gaz neutre à une température au moins égale à 100 °C, au régime nominal de fonctionnement du réacteur.

Par rapport aux réacteurs de l'art antérieur, l'élévation de la température des fermetures supérieures de la cuve principale du réacteur conduit à une simplification substantielle de ce dernier. En effet, elle permet de supprimer toute isolation thermique des fermetures supérieures de la cuve, aussi bien au niveau des surfaces horizontales (semelle inférieure de la dalle et des bouchons tournants) qu'au niveau des surfaces verticales (viroles de traversée des composants tels que les échangeurs de chaleur, les pompes, et les bouchons tournants). Cette suppression a pour conséquence une réduction importante du coût du réacteur. De plus, elle permet de simplifier et de dégager la soudure hétérogène de l'attente de cuve en acier inoxydable avec la dalle en acier noir, autorisant ainsi un meilleur contrôle de cette soudure après sa réalisation et éventuellement son inspection en service, voire sa réparation par un robot.

Par ailleurs, la réduction du diamètre des viroles de traversée des composants résultant de la suppression de l'isolation thermique permet de réduire le diamètre de la cuve principale. De plus, la température de la dalle étant plus proche de la température de la cuve que dans les solutions antérieures, les contraintes thermiques intervenant en fonctionnement au niveau de la liaison entre la dalle et la partie supérieure, ou attente, de la cuve, sont sensiblement réduites. De façon analogue, la différence de température entre le ciel gazeux et les structures de fermeture étant plus faible, l'activité des thermosiphons du gaz dans les espaces annulaires des traversées des composants et les hétérogénéités thermiques qu'ils entraînent sont réduites. Enfin, comme on l'a déjà mentionné, la température de la dalle et des bouchons tournants permet d'y intégrer les brides du supportage des composants. Si l'on tient compte de tous ces éléments, on voit que la présente invention conduit à un gain économique important et à une amélioration de la fiabilité par rapport aux solutions antérieures.

Conformément à l'invention, la borne inférieure de 100 °C est déterminée expérimentalement par la température de solidification des condensats de sodium, c'est-à-dire la température pour laquelle les surfaces des fermetures supérieures en contact avec le gaz neutre (généralement de l'argon) recouvrant le sodium liquide sont maintenues au-dessus de la température pour laquelle des dépôts de sodium risquent de se geler. La température la plus élevée pouvant être atteinte est déterminée par la tenue mécanique des liaisons, en particulier avec le génie civil, en fonctionnement normal du réacteur. Compte tenu des évolutions possibles de ces liaisons, il n'est pas possible de préciser une température limite supérieure, même s'il est actuellement difficile de dépasser une température de 180 °C.

Selon une réalisation préférée de l'invention, on refroidit les fermetures supérieures à une température choisie à environ 120 °C pour le régime nominal de fonctionnement du réacteur, régime pour lequel la tension de vapeur du sodium est importante et où se développent dans le ciel gazeux des aérosols de sodium susceptibles de se condenser sur les fermetures supérieures.

Selon une première variante de réalisation, le gaz de refroidissement peut être constitué par de l'air atmosphérique prélevé à l'extérieur du bâtiment réacteur surplombant lesdites fermetures, avant de le réchauffer éventuellement, de le faire circuler dans le circuit de refroidissement, de le filtrer et de l'évacuer à l'extérieur du bâtiment réacteur.

Selon une deuxième variante de réalisation, le gaz de refroidissement est de l'air prélevé dans le bâtiment réacteur surplombant lesdites fermetures, avant de le réchauffer éventuellement, de le faire circuler dans le circuit de refroidissement, de le refroidir, de la filtrer et de l'évacuer à l'intérieur du bâtiment réacteur.

Enfin, et selon une troisième variante de réalisation de l'invention, le gaz de refroidissement circule dans un circuit fermé comprenant le circuit de refroidissement, au moins un échangeur de chaleur placé à la sortie de ce dernier, au moins un moyen pour faire circuler le gaz et, éventuellement un réservoir tampon. Dans cette variante on peut utiliser un gaz neutre compatible avec le sodium ou plus simplement de l'air pour éviter le rejet chaud dans le hall réacteur.

A l'intérieur de chaque compartiment la première paroi peut présenter des ouvertures rapprochées et délimiter de plus la face supérieure d'un caisson de répartition par lequel pénètre le gaz, lesdites ouvertures définissant des jets discrets amenant le gaz en contact direct avec la face inférieure des fermetures. Ces caissons de répartition peuvent être alimentés soit par des espaces annulaires sectorisés définis à la périphérie externe de la dalle et des bouchons tournants, soit par des puits verticaux avec protection biologique intégrée débouchant sur la face supérieure desdites fermetures.

On peut aussi alimenter en gaz des cyclones disposés dans le collecteur d'alimentation, de façon à amener le gaz en contact direct avec la face inférieure des fermetures.

De préférence, chacun des cyclones est alors alimenté par un puits vertical avec protection biologique intégrée débouchant sur la face supérieure desdites fermetures.

Selon une autre caractéristique de l'invention, à l'intérieur de chaque compartiment, le collecteur d'alimentation communique avec le collecteur d'évacuation par au moins un passage délimité par une virole de traversée d'un composant tel qu'un échangeur de chaleur, une pompe ou un bouchon tournant.

On décrira maintenant, à titre d'exemple non limitatif, plusieurs modes de réalisation des fermetures supérieures de la cuve principale d'un réacteur refroidi selon la présente invention, en se référant aux dessins annexés dans lesquels :

la figure 1 est une vue schématique, en coupe axiale, d'un réacteur nucléaire à neutrons rapides selon l'invention comportant des fermetures supérieures refroidies,

la figure 2 est une vue de dessus et en coupe des fermetures supérieures du réacteur représenté sur la figure 1, illustrant de façon schématique le refroidissement de ces fermetures au moyen d'un gaz circulant dans des compartiments étanches,

la figure 3 est une vue comparable à la figure 2 illustrant à plus grande échelle le compartiment étanche de la dalle désigné par A sur cette figure, cette vue correspondant à une coupe selon la ligne III-III de la figure 4,

la figure 4 est une vue en coupe verticale selon la ligne IV-IV de la figure 3, illustrant une variante de réalisation selon laquelle le gaz circule en circuit fermé et débouche à proximité de la paroi inférieure de la dalle sous forme de jets discrets,

les figures 5 et 6 sont des vues en coupe schématique comparables à la figure 4 illustrant deux variantes de réalisation, dans lesquelles le circuit de refroidissement est légèrement modifié par rapport à la variante de la figure 4,

la figure 7 est une vue en perspective éclatée illustrant une autre variante de réalisation, selon laquelle le gaz de refroidissement est amené en contact direct avec la paroi inférieure de la dalle par des puits verticaux communiquant avec des cyclones, et

la figure 8 est une vue en coupe verticale faisant apparaître l'intégration à la dalle de la bride de supportage du grand bouchon tournant.

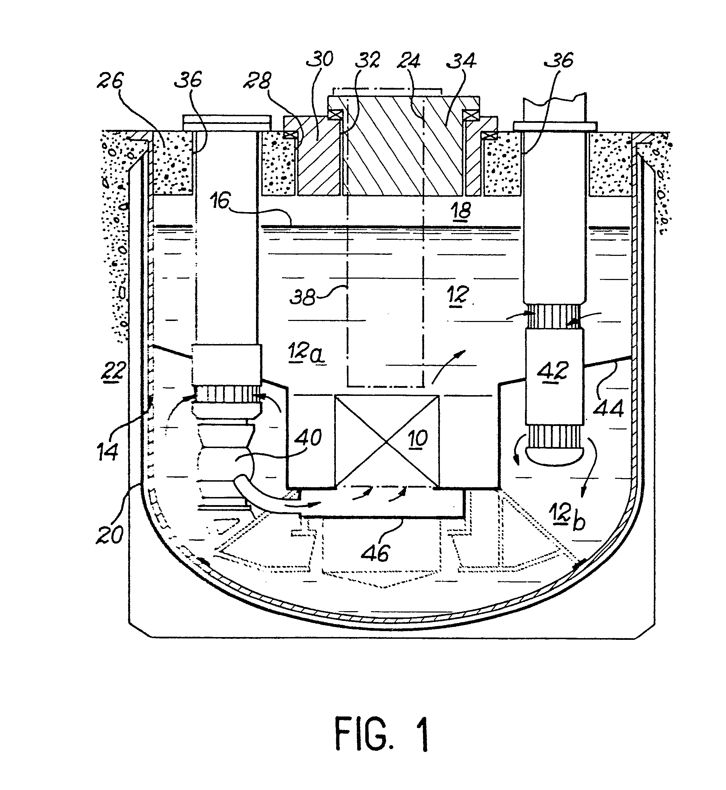

Sur la figure 1, la référence 10 désigne le cœur d'un réacteur nucléaire à neutrons rapides, représenté immergé dans une masse appropriée de métal liquide 12, notamment du sodium, destiné à assurer le refroidissement du cœur lors du fonctionnement du réacteur. Le sodium liquide 12 est confiné à l'intérieur de la cuve principale 14, jusqu'au niveau schématisé en 16, celui-ci étant surmonté d'une atmosphère ou d'un ciel 18 d'un gaz neutre, généralement constitué par de l'argon. La cuve principale 14 est elle-même entourée d'une seconde cuve 20, dite cuve de sécurité, l'ensemble de ces deux cuves présentant un axe vertical commun et étant disposé à l'intérieur d'une enceinte de protection extérieure 22, généralement appelée puits de cuve. L'enceinte 22 supporte à sa partie supérieure une dalle de fermeture 26. Cette dernière s'étend horizontalement au-dessus du niveau 16 du sodium liquide dans la cuve 14 et comporte une ouverture centrale 28 pour la mise en place d'un grand bouchon tournant 30 comportant lui-même une ouverture 32 pour la mise en place d'un petit bouchon tournant 34. Selon un montage parfaitement classique, le petit bouchon tournant est excentré par rapport au grand bouchon tournant, de telle sorte que ces deux bouchons permettent par leur rotation mutuelle de desservir le cœur 10 au moyen d'un outil d'intervention tel qu'un ringard (non représenté sur la figure). La dalle 26 comporte également d'autres passages tels que les passages 36 pour le montage d'appareils nécessaires au fonctionnement du réacteur et en particulier à la circulation du sodium liquide et à l'extraction des calories recueillies à la traversée du cœur. Ces appareils comprennent notamment des pompes dont l'une est représentée schématiquement en 40 et des échangeurs de chaleur dont l'un est représenté schématiquement en 42. Le petit bouchon tournant 34 comporte également un passage 24 dans lequel est reçu le bouchon du couvercle de cœur 38 portant les barres absorbantes assurant le pilotage et l'arrêt du réacteur ainsi qu'un certain nombre d'appareils de mesure et de contrôle. Une cuve interne 44 sépare le sodium liquide 12 en un collecteur chaud 12a disposé au-dessus du cœur et un collecteur froid 12b disposé en-dessous et à la périphérie de celui-ci. Comme l'indiquent les flèches sur la figure 1, les pompes 40 prélèvent le sodium dans le collecteur froid 12b pour l'injecter par l'intermédiaire d'un sommier 46 à l'extrémité inférieure du cœur 10 du réacteur. Le sodium chaud sortant du cœur dans le collecteur chaud 12a est acheminé vers les échangeurs 42 dans lesquels il perd une partie de ses calories avant d'être évacué dans le collecteur froid 12b où il est repris par les pompes 40. La dalle 26 et chacun des bouchons tournants 30 et 34 constituent les éléments essentiels de ce que l'on appelle généralement les fermetures supérieures de la cuve principale 14.

Lors du fonctionnement du réacteur, les fermetures supérieures de la cuve 14 sont refroidies conformément à l'invention à une température suffisamment basse pour supprimer tout risque de fissures lié aux contraintes thermiques des liaisons avec le génie civil, et suffisamment élevée pour qu'aucun dépôt de sodium ne risque de se geler sur les faces inférieures et les traversées de la dalle et des bouchons tournants qui sont directement en contact avec l'atmosphère d'argon 18. La limite de température supérieure dépend de la conception d'ensemble du réacteur et ne peut être précisée. En revanche, la limite inférieure peut être fixée approximativement à 100 °C. Selon une réalisation préférée de l'invention, on fixe cette température à environ 120 °C au régime nominal de fonctionnement du réacteur.

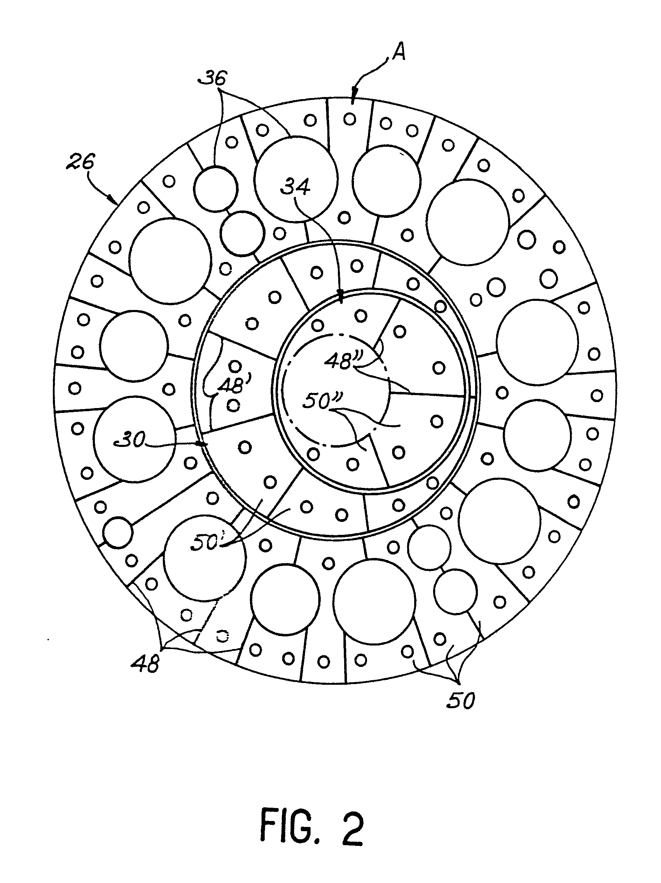

Selon l'invention dont différentes variantes sont représentées en se référant aux figures 2 à 8, le fluide de refroidissement circule dans des espaces aménagées dans les fermetures supérieures de la cuve. De plus, ce fluide est un gaz qui peut être constitué selon le cas soit par de l'air, soit par un gaz neutre réfrigéré tel que de l'azote, de l'hélium ou de l'argon, ce gaz étant utilisé à une pression voisine de la pression atmosphérique.

Les figures 2 à 4 illustrent en particulier la subdivision de la dalle et de chacun des bouchons tournants en compartiments étanches et la structure de l'un de ces compartiments montrant la configuration des circuits de refroidissement définis par chacun de ces compartiments.

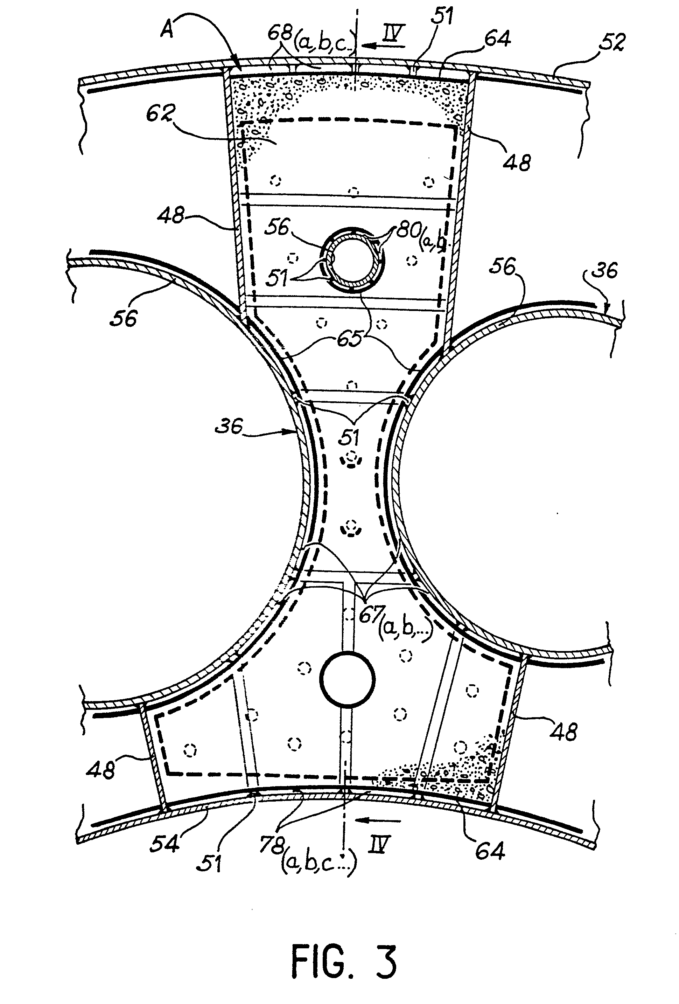

Ainsi, on voit sur les figures 2 et 3 que la dalle 26 présente une structure externe rigide, notamment en acier, contenant un matériau de remplissage 62 tel que du béton, cette structure étant divisée par des cloisons verticales 48 en un certain nombre de compartiments étanches 50. Comme on le verra par la suite, chacun des compartiments 50 définit un circuit de refroidissement indépendant dans lequel circule le gaz de refroidissement. De façon plus précise, les cloisons ou raidisseurs 48 s'étendent selon une direction approximativement radiale et sont soudées aux viroles résistantes de traversée 56 définissant les passages 36 pour les composants ainsi qu'aux viroles externe 52 et interne 54 de la dalle. Ainsi, les parois de chacun des compartiments 50 comprennent des parties radiales rectilignes définies par les cloisons 48, des parties en arc de cercle définies par les viroles de traversée 56 et des parties en arc de cercle définies par les viroles interne 54 et externe 52 de la dalle 26 (figure 3).

De façon comparable, dans la variante de réalisation représentée sur la figure 2, le grand bouchon tournant 30 et le petit bouchon tournant 34 présentent tous deux une structure externe en acier contenant du béton de remplissage et divisée en compartiments 50' et 50" par des cloisons verticales 48' et 48" qui s'étendent sensiblement radialement par rapport à l'axe de symétrie de la cuve. Chacun des compartiments 50' et 50" définit alors un circuit de refroidissement dans lequel circule le gaz de refroidissement. Dans une variante non représentée, les cloisons 48' et 48" peuvent être supprimées, de telle sorte que chacun des bouchons tournants définit alors un compartiment unique formant un circuit de refroidissement dans lequel circule le gaz.

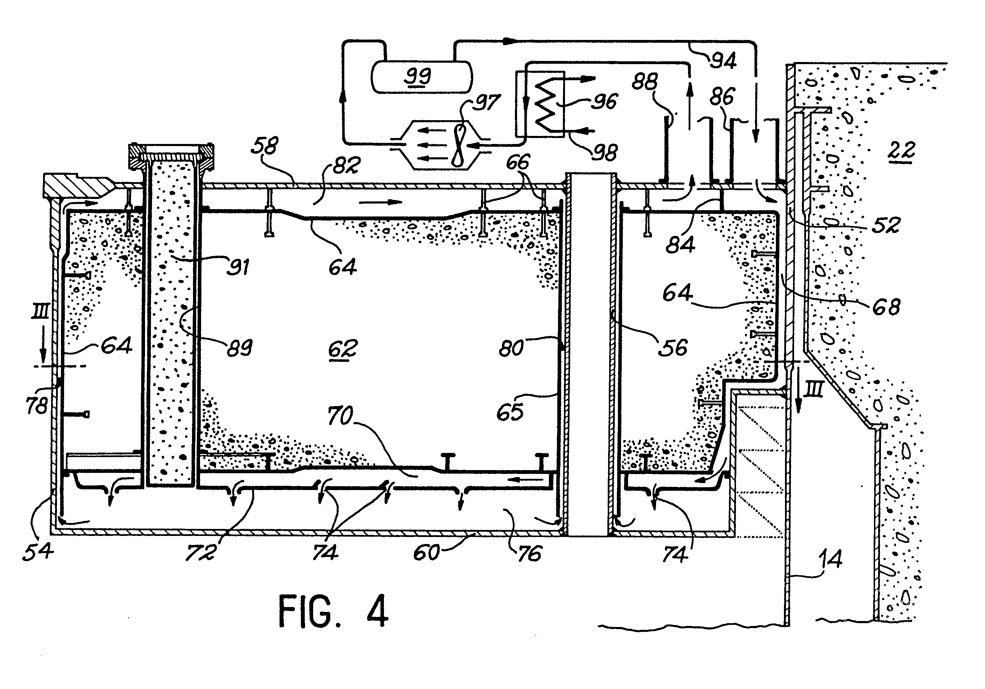

Sur la figure 3, on a représenté en coupe et à plus grande échelle l'un des compartiments 50 de la dalle 26 repéré par la référence A sur la figure 2. Ce même compartiment est représenté en coupe verticale sur la figure 4.

Sur ces figures 3 et 4, on distingue de façon plus précise la structure rigide assurant la tenue mécanique de la dalle et le remplissage de béton 62 servant de protection biologique et localement de raidisseur pour certaines parties de la structure métallique. Ainsi, on voit que la structure métallique se compose, en plus de la virole périphérique externe 52, de la virole interne 54, et des viroles de traversées 56, d'une paroi ou semelle supérieure 58 et d'une paroi ou semelle inférieure 60, les cloisons radiales 48 découpant comme on l'a vu l'intérieur de cette structure métallique en un certain nombre de compartiments 50.

Comme le montre en particulier la figure 4, le béton de remplissage 62 est disposé à l'intérieur de cette structure de façon à définir avec cette dernière un circuit de refroidissement dans chacun des compartiments 50. A cet effet, le béton de remplissage 62 est confiné dans les enveloppes métalliques 64 et 65 soudées aux cloisons 48 et supportées par des tirants 66 placés entre la semelle supérieure 58 et la paroi supérieure de l'enveloppe 64. Le circuit de refroidissement formé dans chacun des compartiments 50 est défini par une succession d'espaces formés entre certaines des parois ou des viroles de la structure métallique de la dalle et les parois correspondantes de l'enveloppe 64. Ainsi, un premier espace 68 est défini entre la virole externe 52 de la dalle et la paroi correspondante de l'enveloppe 64. Les espaces ou passages 67, 68, 78 et 80, relatifs à chaque compartiment 50 et définis entre les viroles 52, 54 de la dalle, les viroles de traversées 56 des composants et les enveloppes 64 et 65, sont découpés en secteurs (68a, 68b,...) par des espaceurs 51 qui permettent d'avoir un écartement constant entre les viroles et les enveloppes et de favoriser une répartition uniforme du gaz de refroidissement dans les passages 67, 68, 78, 80.

Dans la variante de la figure 4, le gaz, arrivant par l'orifice 86 pénètre dans le passage 68 qui communique par sa partie inférieure avec un caisson de répartition 70 défini entre la face inférieure de l'enveloppe 64 et une paroi 72 disposée en vis-à-vis de la semelle inférieure 60 de la dalle. La paroi 72 est percée d'un nombre important d'ouvertures ou de trous 74 relativement rapprochés par lesquels le gaz de refroidissement admis dans le caisson 70 s'échappe sous forme de jets discrets. Le gaz pénètre alors dans un collecteur d'alimentation 76 défini entre la cloison 72 et la semelle inférieure 60, de façon à venir lécher cette dernière en contact direct pour assurer son refroidissement. Le gaz de refroidissement remonte ensuite vers la partie supérieure de la dalle simultanément par des espaces sectorisés tels que 78a, 78b,... définis entre la virole interne 54 de la dalle et la paroi correspondante de l'enveloppe 64, et par des espaces sectorisés 80a, 80b,... définis entre la virole de traversée 56 assurant le passage d'un composant et la paroi correspondante de l'enveloppe 65. Chacun des espaces sectorisés 78 et 80 communique avec un collecteur d'évacuation 82 défini entre la semelle supérieure 58 de la dalle et la cloison correspondante de l'enveloppe 64, de sorte que cet espace 82 sert de collecteur pour le gaz de refroidissement et permet le réchauffage de la semelle supérieure 58 pour homogénéiser la température des structures. Une cloison verticale 84 permet de séparer de façon étanche le gaz de refroidissement « froid » admis par l'orifice d'entrée 86 dans l'espace 68 du gaz de refroidissement « chaud » évacué du collecteur 82 par l'orifice de sortie 88. Les orifices 86 et 88 ont été représentés à titre d'exemple, pour une dalle pendue au génie civil 22, comme étant situés sur la semelle supérieure 58 de la dalle, mais on comprendra qu'ils peuvent éventuellement être placés sur la virole externe 52 pour des solutions différentes de supportage de la dalle.

On voit sur la figure 4 qu'une cheminée 89 peut mettre en communication le collecteur 76 avec le dessus de la dalle, cette cheminée étant normalement obturée par un bouchon 91 rempli de béton. Une telle cheminée permet notamment de réaliser si nécessaire des inspections en service de la semelle inférieure 60 et de la base des viroles de traversée 56 de la dalle.

Elle peut également, si nécessaire permettre en cas de panne des moyens de circulation du gaz, d'assurer un refroidissement de secours par convection naturelle ou par circulation forcée extérieure.

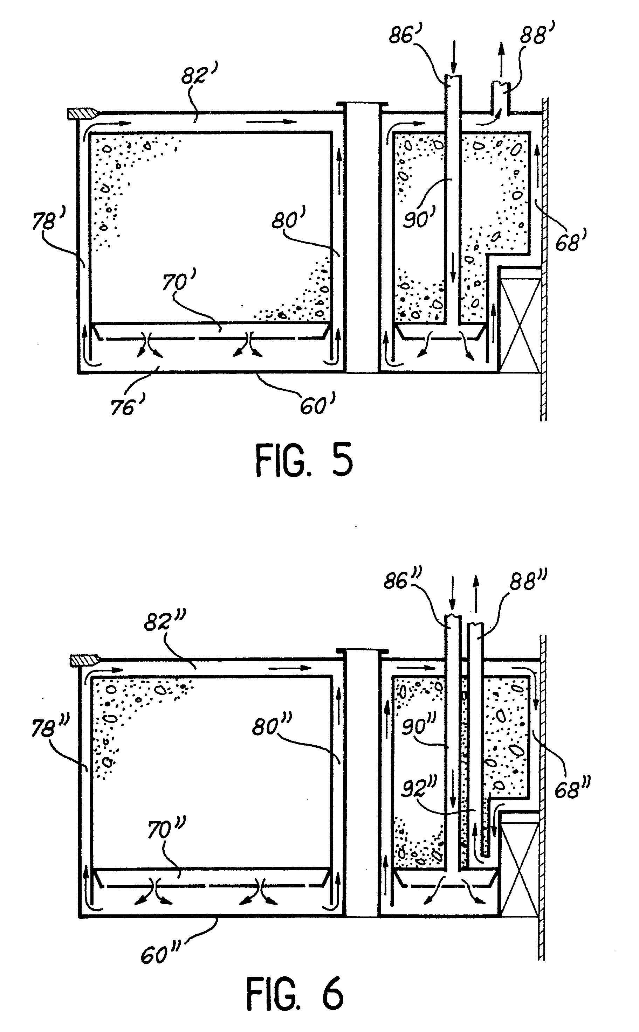

Sur les figures 5 et 6, on a représenté à titre d'exemples non limitatifs deux variantes de réalisation du circuit de refroidissement du compartiment désigné par la référence A sur la figure 2.

Ainsi, sur la figure 5, l'orifice d'entrée 86' est prolongé par au moins un puits vertical 90' qui débouche directement dans le caisson de répartition 70'. De plus, le gaz ayant servi au refroidissement de la semelle inférieure 60' est ramené du collecteur 76' vers le collecteur 82' simultanément par chacun des espaces 78', 80' et 68'. En raison de l'arrivée directe du gaz de refroidissement dans le caisson 70' par le puits 90' et du retour de ce gaz vers l'orifice de sortie 88' par les espaces 68', 78' et 80', la cloison 84 de la variante de la figure 4 n'a plus de raison d'être et peut être supprimée. Cette variante se distingue essentiellement de la variante de la figure 4 par le fait que les puits 90' peuvent faire office de cheminée (de convection naturelle) en cas de panne des moyens commandant normalement la circulation du gaz (ventilateurs 97 sur la figure 4).

Dans la variante de réalisation de la figure 6, l'arrivée du gaz dans le caisson 70" se fait comme dans la variante de la figure 5 par au moins un puits 90" qui communique directement avec l'orifice d'entrée 86". Cependant, au lieu de communiquer directement avec le collecteur 82" comme dans les variantes des figures 4 et 5, l'orifice de sortie 88" est raccordé par au moins un puits 92" à la partie inférieure de l'espace 68", de telle sorte que le gaz ayant servi au refroidissement de la semelle inférieure 60" remonte par les espaces 78" et 80" jusqu'au collecteur 82", puis redescend par l'espace 68" avant de remonter par le puits 92" vers l'orifice de sortie 88". L'utilisation de puits 90" et 92" permet encore d'améliorer la convection naturelle et, donc, le fonctionnement en cas de panne des moyens pour faire circuler le gaz de refroidissement, par rapport à la variante de la figure 5.

Par ailleurs, les figures 5 et 6 peuvent s'adapter correctement au refroidissement des bouchons tournants, dans la phase manutention réacteur, par un circuit ouvert sur le hall réacteur, l'air étant véhiculé par des ventilateurs montés dans lesdits bouchons et évacué dans le hall par l'intermédiaire d'un mélangeur, les flux de chaleur à évacuer étant beaucoup plus faibles qu'au fonctionnement nominal.

Dans les trois variantes de réalisation qui viennent d'être décrites, on remarquera que le gaz de refroidissement est acheminé rapidement vers la semelle inférieure de la dalle afin que le refroidissement de celle-ci soit assuré en priorité. Ce refroidissement, qui s'effectue au moyen de jets discrets formés à partir des ouvertures 74 définies dans la cloison inférieure 72 du caisson de répartition 70, précède la remontée simultanée du gaz de refroidissement le long des viroles 56 assurant le passage des composants et le long de la virole interne 54 assurant le passage du grand bouchon tournant. De préférence pour des conditions normales de fonctionnement, on refroidit la virole externe 52 en priorité.

Bien entendu, un circuit de refroidissement de ce type peut être défini dans chacun des compartiments 50 défini par les cloisons 48 à l'intérieur de la dalle et dans chacun des compartiments 50' et 50" défini par les cloisons 48' et 48" à l'intérieur du grand bouchon tournant 30 et du petit bouchon tournant 34.

Si l'on souhaite réaliser une structure permettant de marcher sur les fermetures supérieures de la cuve, il est nécessaire de recouvrir la semelle supérieure d'un calorifuge protégé par un plancher de caillebotis ou placé sous le plancher des protections biologiques complémentaires, en raison de la température relativement élevée de ces fermetures. Toutefois, ce calorifuge est de type tout à fait classique (laine de verre par exemple) et n'a rien à voir avec le calorifugeage métallique en milieu argon-sodium particulièrement coûteux qui doit selon l'art antérieur être placé sous la semelle inférieure et dans les viroles de traversée.

Conformément à un autre aspect de l'invention, la circulation du gaz de refroidissement dans chacun de ces circuits peut être réalisée de différentes manières.

Ainsi, dans une variante de réalisation non décrite, cette circulation peut s'effectuer en circuit ouvert, le gaz de refroidissement étant alors de l'air atmosphérique. Cet air de refroidissement peut être soit prélevé à l'extérieur du bâtiment réacteur (non représenté) surplombant les fermetures supérieures de la cuve principale, soit directement à l'intérieur de ce bâtiment. Dans les deux cas, des moyens tels que des ventilateurs permettent d'acheminer l'air jusqu'aux orifices d'entrée 86 de chacun des circuits.

On peut aussi envisager de faire circuler le gaz de refroidissement dans un ou plusieurs circuits fermés contenant les circuits de refroidissement définis dans chacun des compartiments 50, 50' et 50". Cette solution est représentée de façon schématique sur la figure 4. En effet, on voit sur cette figure que le circuit de refroidissement défini dans le compartiment A représenté est placé dans un circuit fermé 94 qui comprend en outre, entre l'orifice de sortie 88 et l'orifice d'entrée 86, un échangeur 96 assurant le refroidissement du gaz au moyen d'un circuit de refroidissement 98, un ventilateur 97 et, éventuellement, un réservoir tampon 99 dans le cas où l'on utilise un gaz neutre. Bien entendu, un tel circuit peut regrouper en parallèle plusieurs et même la totalité des circuits de refroidissement définis dans la dalle et dans les bouchons tournants.

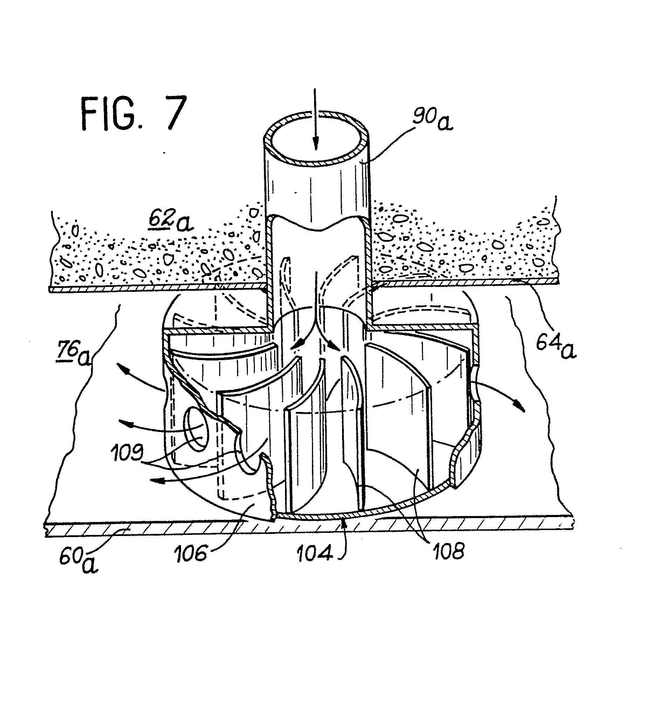

Sur la figure 7, on a représenté une variante des moyens de refroidissement de la semelle inférieure 60a de la dalle, dans laquelle la formation de jets discrets au moyen d'ouvertures formées dans la cloison inférieure d'un caisson de répartition est remplacée par la formation de tourbillons de gaz au moyen de cyclones 104, relativement peu nombreux, répartis régulièrement à l'intérieur du collecteur 76a défini entre la semelle 60a et la paroi correspondante de l'enveloppe 64a. De façon plus précise, l'alimentation en gaz de chacun des cyclones 104 s'effectue par des puits verticaux 90a qui traversent le béton de remplissage 62a pour déboucher chacun dans un cyclone 104. Chaque cyclone 104 se compose d'un boîtier cylindrique 106 dont l'axe vertical est confondu avec celui du puits 90a correspondant. Chacun des puits 90a débouche dans un cyclone 104 et ce dernier présente un certain nombre d'ailettes 108 qui sont disposées sensiblement radialement à l'intérieur du boîtier 106. Les ailettes 108 ont une forme incurvée donnant au gaz de refroidissement arrivant en leur centre par le puits 90a un mouvement tourbillonnaire. Des ouvertures 109, de forme circulaire dans la variante représentée, sont formées dans la cloison périphérique du boîtier 106 pour permettre au gaz de refroidissement de pénétrer dans le collecteur 76a et de venir lécher en contact direct la semelle inférieure 60a afin d'assurer son refroidissement.

Dans toutes les variantes qui viennent d'être décrites du circuit de refroidissement par gaz défini dans chacun des compartiments 50, on remarquera que le gaz vient en contact direct avec chacune des parois à refroidir, c'est-à-dire principalement avec la semelle inférieure 60, les viroles 56, 54 et 52 et la semelle supérieure 58. La température ainsi obtenue étant choisie selon l'invention supérieure à 100 °C, aucun gel de sodium sur la face inférieure de la semelle 60 ou sur les faces internes des viroles 56 et 54 ne se produit. Il est ainsi possible de supprimer toute isolation thermique à ce niveau, ce qui conduit à un gain économique appréciable si l'on tient compte du coût du calorifuge métallique qui doit être utilisé dans les réacteurs nucléaires de la technique antérieure dont la dalle est refroidie à une température voisine de 50 °C.

Bien entendu, les températures atteintes grâce aux circuits de refroidissement qui viennent d'être décrits dépendent à la fois de la nature du gaz utilisé, de la température à laquelle ce gaz est injecté dans les circuits de refroidissement et du débit moyen de ce gaz. Ainsi, à titre indicatif dans le cas où l'on utilise de l'air en vue de refroidir les fermetures supérieures à une température moyenne quasi homogène de 120°, la puissance totale à évacuer en fonctionnement nominal étant de 950 kW, l'air entrera dans les circuits de refroidissement à une température d'environ 85 °C pour ressortir à une température d'environ 115 °C, le débit moyen étant de 30 m³/s.

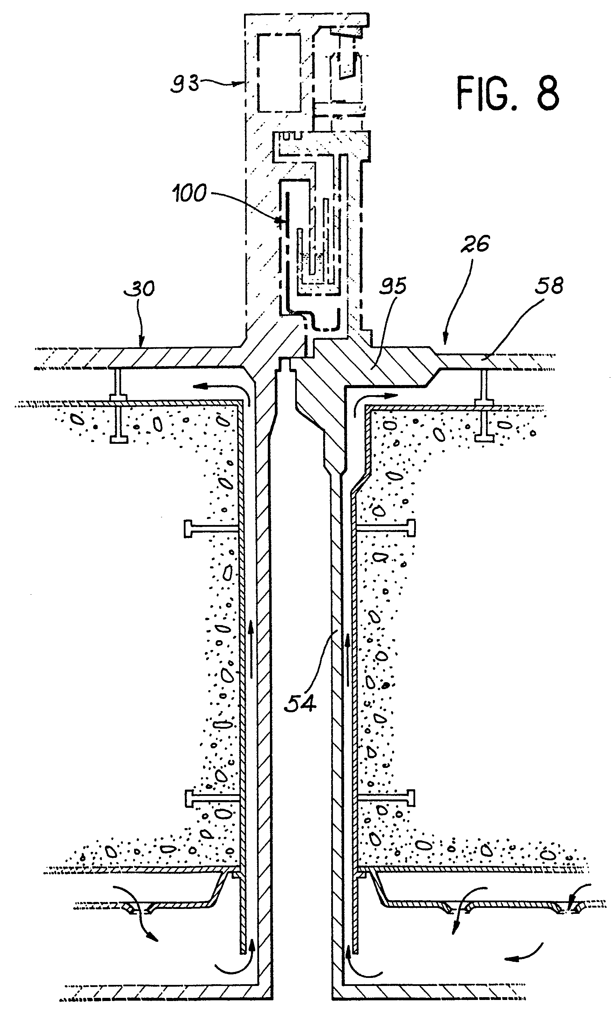

Comme l'illustre en particulier la figure 8, le maintien des fermetures supérieures de la cuve principale à une température supérieure à la température pour laquelle risquent de se produire le gel des dépôts de sodium sur les surfaces baignées par l'atmosphère de gaz chargée de vapeur et d'aérosol de sodium de la dalle et des bouchons tournants permet d'intégrer à la structure métallique de chacun de ces éléments certaines des brides de supportage des bouchons tournants et des autres composants tels que les pompes conduisant à une réduction du poids de matière mise en œuvre ainsi que de l'encombrement axial. En effet, on sait que ces brides de supportage doivent être portées à une température empêchant tout gel de dépôt de sodium, ce qui interdisait leur intégration à la structure de la dalle lorsque celle-ci était refroidie à une température d'environ 50 °C conformément à la technique antérieure, en raison des contraintes thermiques qui en auraient résulté. Ainsi, on voit sur la figure 8 que la bride de supportage 95 du grand bouchon tournant 30 fait partie intégrante à la fois de la semelle supérieure 58 de la dalle et de la virole interne 54 de cette dernière. L'ensemble des moyens 93 assurant le supportage, le guidage et la rotation du bouchon tournant 30 par rapport à la dalle 26, ainsi que les moyens d'étanchéité 100 qui leur sont associés sont par ailleurs identiques aux moyens connus de la technique antérieure et ne seront pas décrits ici en détail.

Bien entendu, la présente invention n'est pas limitée par les variantes de réalisation qui viennent d'être décrites.

C'est ainsi qu'elle peut s'appliquer aussi bien aux réacteurs à neutrons rapides refroidis par métal liquide du type « réacteurs à boucles » qu'aux réacteurs rapides du type « intégré » illustré sur les figures de la présente invention.

## Revendications

1. Réacteur nucléaire à neutrons rapides, refroidi par un métal liquide (12) contenu dans une cuve principale (14) à axe vertical et surmonté par une atmosphère de gaz neutre (18), ladite cuve étant obturée par des fermetures supérieures horizontales comprenant une dalle (26) et au moins un bouchon tournant (30, 34), ces fermetures supérieures comportant au moins un circuit de circulation d'un fluide de refroidissement placé à l'intérieur desdites fermetures, caractérisé en ce que le fluide de refroidissement est un gaz, ledit circuit comportant une pluralité de compartiments (50, 50', 50") délimités par des cloisons verticales (48, 48', 48") sensiblement radiales, le gaz traversant, à l'intérieur de chaque compartiment, l'épaisseur desdites fermetures de haut en bas, pour pénétrer dans un collecteur d'alimentation (76) délimité entre la face inférieure (60) desdites fermetures et une première paroi (72) sensiblement horizontale située au-dessus de celle-ci, le gaz retraversant ensuite, à l'intérieur de chaque compartiment, l'épaisseur desdites fermetures de bas en haut, pour pénétrer dans un collecteur d'évacuation (82) délimité entre la face supérieure (58) des fermetures et une deuxième paroi (64) sensiblement horizontale située en dessous de celle-ci, de façon à refroidir lesdites fermetures à une température quasi homogène et à maintenir les surfaces baignées par l'atmosphère de gaz neutre à une température au moins égale à 100 °C, au régime nominal de fonctionnement du réacteur.

2. Réacteur nucléaire selon la revendication 1, caractérisé en ce que, à l'intérieur de chaque compartiment, la première paroi (72) présente des ouvertures rapprochées (74) et délimite de plus la face inférieure d'un caisson de répartition (70) par lequel pénètre le gaz, lesdites ouvertures définissant des jets discrets amenant le gaz en contact direct avec la face inférieure des fermetures.

3. Réacteur nucléaire selon la revendication 2, caractérisé en ce que des espaces annulaires sectorisés (68) d'alimentation en gaz sont définis à la périphérie externe de la dalle (26) et du bouchon tournant (30, 34), et débouchant dans les caissons de répartition (70).

4. Réacteur nucléaire selon la revendication 2, caractérisé en ce que des puits verticaux d'alimentation en gaz (90', 90") débouchent sur la face supérieure desdites fermetures et dans les caissons de répartition (70', 70").

5. Réacteur nucléaire selon la revendication 1, caractérisé en ce que des cyclones (104) d'alimentation en gaz sont disposés dans le collecteur d'alimentation (76a) de façon à amener le gaz en contact direct avec la face inférieure des fermetures.

6. Réacteur nucléaire selon la revendication 5, caractérisé en ce que chacun des cyclones (104) communique avec un puits vertical d'alimentation (90a) débouchant sur la face supérieure desdites fermetures.

7. Réacteur nucléaire selon l'une quelconque des revendications 1 à 6, caractérisé en ce que, à l'intérieur de chaque compartiment, le collecteur d'alimentation (76) communique avec le collecteur d'évacuation (82) par au moins un passage (80, 80', 80") délimité par une virole de traversée (54, 56) d'un composant tel qu'un échangeur de chaleur (42), une pompe (40) ou un bouchon tournant (30, 34).

8. Réacteur nucléaire selon les revendications 1 à 7, caractérisé en ce que la dalle comporte des cheminées (89), normalement obturées par des bouchons (91), pouvant mettre en communication le collecteur d'alimentation (76) avec le dessus de la dalle, et permettant d'effectuer des inspections en service de la semelle inférieure (60) et des bases des viroles de traversée (56), et d'évacuer, par circulation forcée ou convection naturelle, en cas de panne des systèmes actifs de circulation du fluide de refroidissement, une partie de l'énergie résiduelle.

9. Réacteur nucléaire selon l'une quelconque des revendications précédentes, caractérisé en ce que le gaz de refroidissement est de l'air atmosphérique prélevé à l'extérieur du bâtiment réacteur surplombant lesdites fermetures avant de le réchauffer éventuellement, de le faire circuler dans ledit circuit de refroidissement, de le filtrer et de l'évacuer à l'extérieur du bâtiment réacteur.

10. Réacteur nucléaire selon l'une quelconque des revendications 1 à 8, caractérisé en ce que le gaz de refroidissement est de l'air prélevé dans le bâtiment réacteur surplombant lesdites fermetures, avant de le réchauffer éventuellement, de le faire circuler dans ledit circuit de refroidissement, de le refroidir, de le filtrer et de l'évacuer à l'intérieur du bâtiment réacteur.

11. Réacteur nucléaire selon l'une quelconque des revendications 1 à 8, caractérisé en ce que le gaz de refroidissement circule dans un circuit fermé (94) comprenant ledit circuit de refroidissement, au moins un échangeur de chaleur (96) placé à la sortie de ce dernier et au moins un moyen (97) pour faire circuler le gaz.

**Claims**

1. Fast neutron nuclear reactor cooled by a liquid metal (12) contained in a principal vessel (14) having a vertical axis and covered by an atmosphere of inert gas (18), said vessel being sealed by upper horizontal closure members comprising a slab (26) and at least one rotatable plug (30, 34), said upper closure members comprising at least one circuit for circulating a cooling fluid located internally of said closure members, characterized in that the cooling fluid is a gas, said circuit comprising a plurality of compartments (50, 50', 50") separated by substantially radial vertical partitions (48, 48', 48"), the gas passing downwardly within each compartment, from top to bottom of said closure members, and passing into an inlet manifold (76) between the lower face (60) of said closure members, and a first substantially horizontal bulkhead (72) located thereabove, the gas then passing back upwardly through each compartment from bottom to top, and passing into an outlet manifold (82) between the upper face (58) of said closure members and a second substantially horizontal bulkhead (64) located therebelow, whereby to cool said closure members to a substantially homogeneous temperature and to maintain the surfaces contacting the inert gas atmosphere at a temperature of a least 100 °C during normal operation of the reactor.

2. Nuclear reactor according to Claim 1, characterized in that, within each compartment, the first bulkhead (72) has closely spaced ports (74) and additionally separates the lower face from a distribution chest (70), through which the gas passes, said ports constituting separate jets leading the gas into direct contact with the lower face of the closure members.

3. Nuclear reactor according to Claim 2, characterized in that annular gas-supply spaces (68) divided into sectors are defined at the edges of the slab (26) and rotatable plug (30, 34), and open into the distribution chest (70).

4. Nuclear reactor according to Claim 2, characterized in that vertical gas-supply shafts (90', 90") open at the upper face of said closure members and in the distribution chests (70', 70").

5. Nuclear reactor according to Claim 1, characterized in that gas-supply cyclones (104) are located in the inlet manifold (76a) whereby to lead the gas into direct contact with the lower face of the closure members.

6. Nuclear reactor according to Claim 5, characterized in that each of the cyclones (104) is in communication with a vertical supply shaft (90a) opening at the upper surface of said closure members.

7. Nuclear reactor according to any one of Claims 1 to 6, characterized in that, within each compartment, the inlet manifold (76) communicates with the outlet manifold (82) by at least one passage (80, 80', 80") deliminated by an access sleeve (54, 56) for a reactor component, such as a heat exchanger (42), a pump (40), or a rotatable plug (30, 34).

8. Nuclear reactor according to Claims 1 to 7, characterized in that slab comprises ducts (89), normally closed by covers (91), for establishing communication between the inlet manifold (76) and the space above the slab, and permitting service inspection of the lower surface plate (60) and the bases of the access sleeve (56), and to remove, in the event of a breakdown in the forced circulation system of the cooling fluid, a portion of the residual energy by forced circulation or by natural convection.

9. Nuclear reactor according to any one of the preceding Claims, characterized in that the cooling gas is atmospheric air, which is collected outside the reactor building, passed through said closure members before heating, circulated through said cooling circuit, filtered and discharged to the outside of the reactor building.

10. Nuclear reactor according to any one of Claims 1 to 8, characterized in that the cooling gas is air collected within the reactor building, passed through said closure members before heating, circulated through said cooling circuit, cooled, filtered, and discharged inside the reactor building.

11. Nuclear reactor according to any one of Claims 1 to 8, characterized in that the cooling gas is circulated in a closed circuit (94), comprising said cooling circuit, at least one heat exchanger (96) located at the outlet thereof, and at least one gas-circulating means (97).

## Ansprüche

1. Schneller Neutronen-Kernreaktor mit Kühlung durch ein flüssiges Metall (12), welches in einem eine senkrechte Achse aufweisenden Hauptbehälter (14) unter einer Atmosphäre aus einem neutralen Gas (18) enthalten ist, wobei der Behälter durch waagerechte obere Verschlüsse verschlossen ist, welche jeweils eine Deckplatte (26) und wenigstens einen drehbaren Deckel (30, 34) aufweisen und in ihrem Inneren wenigstens ein System für die Umwälzung eines Kühlfluids enthalten, dadurch gekennzeichnet, daß das Kühlfluid ein Gas ist und daß das Umwälzsystem eine Anzahl von durch senkrechte und im wesentlichen radiale Trennwände (48, 48', 48") begrenzten Abteilungen (50, 50', 50") aufweist, wobei das Gas im Inneren jeder Abteilung die Dicke der Verschlüsse von oben nach unten durchströmt, um in einen durch die Unterseite (60) der Verschlüsse und eine oberhalb derselben im wesentlichen waagerecht angeordnete erste Wand (72) begrenzten Einlaßverteiler (76) zu gelangen, und das Gas dann im Inneren jeder Abteilung die Dicke der Verschlüsse von unten nach oben durchströmt, um in einen durch die Oberseite (58) der Verschlüsse und eine unterhalb derselben im wesentlichen waagerechte angeordnete zweite Wand (64) begrenzten Auslaßsammler (82) zu gelangen, um damit die Verschlüsse auf eine im wesentlichen gleichmäßige Temperatur zu kühlen und die von der Atmosphäre eines neutralen Gases bestrichenen Oberflächen bei Nennbelastung im Betrieb des Reaktors auf einer Temperatur von wenigstens 100 °C zu halten.

2. Kernreaktor nach Anspruch 1, dadurch gekennzeichnet, daß die erste Wand (72) im Inneren jeder Abteilung nahe beieinander liegende Öffnungen (74) aufweist und außerdem die Unterseite einer Verteilerkammer (70) begrenzt, durch welche das Gas hindurchströmt, wobei die Öffnungen einzelne Düsenstrahlen bilden, welche das Gas in direkten Kontakt mit der Unterseite der Verschlüsse bringen.

3. Kernreaktor nach Anspruch 3, dadurch gekennzeichnet, daß am äußeren Umfang der Deckplatte (26) und des drehbaren Deckels (30, 34) in Abschnitte unterteilte ringförmige Räume (68) für die Gaszufuhr gebildet sind, welche in den Verteilerkammern (70) ausmünden.

4. Kernreaktor nach Anspruch 2, dadurch gekennzeichnet, daß senkrechte Gaszufuhrschächte (90', 90") an der Oberseite der Verschlüsse und in den Verteilerkammern (70) ausmünden.

5. Kernreaktor nach Anspruch 1, dadurch gekennzeichnet, daß im Einlaßverteiler (76a) Gaszufuhrzyklone (104) derart angeordnet sind, daß das Gas in direkten Kontakt mit der Unterseite der Verschlüsse gebracht wird.

6. Kernreaktor nach Anspruch 5, dadurch gekennzeichnet, daß jeder Zyklon (104) mit einem an der Oberseite der Verschlüsse ausmündenden senkrechten Zufuhrschacht (90a) strömungsverbunden ist.

7. Kernreaktor nach einem der Ansprüche 1 bis 6, dadurch gekennzeichnet, daß der Einlaßverteiler (76) im Inneren jeder Abteilung mit dem jeweiligen Auslaßsammler (82) über wenigstens einen Durchlaß (80, 80', 80") strömungsverbunden ist, welcher von einem Durchführungsmantel (54, 56) eines Bauteils, z. B. eines Wärmetauschers (42), einer Pumpe (40) oder eines drehbaren Deckels (30, 34) begrenzt ist.

8. Kernreaktor nach den Ansprüchen 1 bis 7, dadurch gekennzeichnet, daß die Deckplatte normalerweise durch Stopfen (91) verschlossene Schächte (89) aufweist, über welche der Einlaßverteiler (76) mit der Oberseite der Deckplatte in Strömungsverbindung versetzbar ist und welche es ermöglichen, die untere Abschlußwand (60) sowie die unteren Teile der Durchführungsschächte (56) zu inspizieren und im Falle einer Betriebsstörung des aktiven Systems für die Umwälzung des Kühlfluids einen Teil der Restenergie durch Zwangsumwälzung oder natürliche Konvektion abzuführen.

9. Kernreaktor nach einem der vorstehenden Ansprüche, dadurch gekennzeichnet, daß das zur Kühlung verwendete Gas atmosphärische Luft ist, welche von außerhalb des über den Verschlüssen errichteten Gebäudes aufgenommen wird, bevor sie gegebenenfalls erwärmt, im Kühlsystem umgewälzt, gefiltert und aus dem Reaktorgebäude abgeführt wird.

10. Kernreaktor nach einem der Ansprüche 1 bis 8, dadurch gekennzeichnet, daß das zur Kühlung verwendete Gas Luft ist, welche aus dem über den Verschlüssen errichteten Reaktorgebäude entnommen wird, bevor sie gegebenenfalls erwärmt, im Kühlsystem umgewälzt, gekühlt, gefiltert und im Inneren des Reaktorgebäudes wieder freigesetzt wird.

11. Kernreaktor nach einem der Ansprüche 1 bis 8, dadurch gekennzeichnet, daß das für die Kühlung verwendete Gas in einem geschlossenen Kreis (94) umgewälzt wird, welcher das genannte Kühlsystem, wenigstens einen Wärmetauscher (96) am Ausgang des letzteren und wenigstens eine Einrichtung (97) für die Umwälzung des Gases umfaßt.

FIG. 1

FIG. 2

**FIG. 3**

FIG. 4

FIG. 5

FIG. 6

FIG. 7

FIG. 8